# EUROPÄISCHE PATENTSCHRIFT

(11) **EP 1 255 012 B1**
(45) Veröffentlichungstag und Bekanntmachung des Hinweises auf die Patenterteilung: **27.10.2004**
(21) Anmeldenummer: 02008843.1
(22) Anmeldetag: 19.04.2002
(51) Int. Cl.: E05D 5/02, E05B 1/00, F16B 37/04, E06B 3/96

(54) **Vorrichtung zur Befestigung eines Teils an einem Strangprofil**
Device for fixing an element to an extruded profile
Dispositif pour fixer un élément sur un profilé extrudé

(30) Priorität: 11.10.2001 DE 20116716 U; 03.05.2001 DE 20107525 U
(43) Veröffentlichungstag der Anmeldung: 06.11.2002
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- EP-A- 0 283 984
- EP-A- 0 514 798
- DE-A- 2 436 844
- DE-A- 3 015 354
- DE-A- 19 518 450
- DE-A- 19 616 164
- US-A- 3 908 330
- US-A- 4 538 936
- US-A- 5 938 368

## Beschreibung

Die Erfindung betrifft eine Vorrichtung zur Befestigung eines Teils, vorzugsweise eines Scharnierteils, an einem Strangprofil durch eine Klemmeinrichtung nach dem Oberbegriff des Anspruchs 1.

Häufig besteht das Problem, an Strangprofilen Beschlagteile zu befestigen, beispielsweise um durch diese Strangprofile miteinander zu verbinden oder durch diese an den Strangprofilen weitere Teile zu befestigen. Bilden Strangprofile die Ränder beispielsweise von Korpusteilen eines Schranks oder einer Klappe, müssen an diesen Scharnierteile zum Anlenken von Türen oder Klappen befestigt werden. Aus DE 297 14 874 U1 ist ein Strangprofil in Form eines Hohlkammerprofils bekannt, an dem dadurch Schamiertöpfe eines Scharniers befestigt werden können, dass das Hohlkammerprofil mit der Kontur des Scharniertopfes entsprechenden Ausschnitten versehen ist und Flansche des Scharniertopfs an Rändern des Ausschnitts durch Ankerscheiben angeklemmt sind, die sich durch Schrauben gegen die Flansche spannen lassen.

Aus der US 3,908,330 A ist eine Vorrichtung zur Befestigung eines Teils an Kohlemetall oder Plastikteile mit den Merkmalen des Oberbegriffs des Anspruchs 1 bekannt.

Aus der DE 24 36 844 A ist ein Befestigungsmittel für Baubeschläge an Metalloder Kunststoff-Hohl-Profilen, insbesondere an Tür- oder Fensterflügeln und -rahmen, mit hinterschnittenen Kammem bekannt, das aus in die Kammem einsetzbaren, die Hinterschneidungen untergreifenden Klemmstücken besteht, die mit den Beschlagteilen über Schrauben verbunden oder verbindbar sind und eine Breite haben, die kleiner als der Öffnungsspalt der hinterschnittenen Kammern ist, während sie eine Länge größer als die Breite des Öffnungsspalts aufweisen sowie um eine rechtwinkelig zu Ihrer Ebene gerichtete Achse verdrehbar an den zu befestigenden Beschlagteilen gehalten sind, welche mit an ihrer Rückseite befindlichen Ansätzen in diese Kammern ausrichtend eingreifen. Die Beschlagteile sind im Bereich ihrer Ansätze mit mindestens einer in den Drehbereich der Klemmstücke hineinragende Anschlagnase versehen, die ein Widerlager für die Klemmstücke bildet und deren Drehbewegung gegenüber den Beschlagteilen wenigstens in einer Richtung begrenzt. Dabei sind in Gewindbohrungen der Klemmstücke die Schrauben schwergängig verdrehbar eingeschraubt, so dass sich bei der Drehung der Schrauben das Klemmstück mitdreht, bis dieses an ein Widerlager anstößt und durch weiteres Anziehen der Schrauben die Klemmstücke festgeklemmt werden.

Aufgabe der Erfindung ist es, eine Vorrichtung der eingangs angegebenen Art zu schaffen, mit der sich in einfacherer Weise und ohne Ausschnitte des Strangprofils an diesem an beliebiger Stelle Teile befestigen lassen.

Erfindungsgemäß wird die Aufgabe durch die Kombination der Merkmale des Anspruchs 1 gelöst.

Das erfindungsgemäße Beschlagteil lässt sich an beliebiger Stelle eines an dieses in der erfindungsgemäßen Weise angepassten Strangprofils dadurch befestigen, dass das Halteteil zwischen die Stege soweit eingeschoben wird, dass sich dessen Stützflansche gegen die Außenseiten der Stege anlegen. Sodann kann das Beschlagteil an beliebiger Stelle des Strangprofils dadurch angeklemmt werden, dass der Stift durch ein Werkzeug soweit gedreht wird, dass das beim Einsetzen zwischen den Stegen liegende Klemmelement soweit gedreht wird, dass dessen auskragenden Teile die Stege hintergreifen und dadurch eine Verspannung des Halteteils mit den Stegen bzw. dem Strangprofil bewirken.

Zweckmäßigerweise bilden die Stege die Ränder eines C-förmigen Profilteils des Strangprofils. Die Stege können sich auch an den Enden der Schenkel eines U-förmigen Profilteils des Strangprofils befinden.

Das Halteteil besteht aus einem etwa rechteckigen Block, dessen zueinander parallelen Seiten an den einander zugewandten Stirnseiten der Stege anliegen, wobei an die zueinander parallelen Seiten des Blocks beidseits Stützflansche anschließen.

Die Stützflansche können durch die Seitenteile einer den Block tragenden Grundplatte gebildet sein.

Vorzugsweise besteht der Riegel aus einer Scheibe mit zueinander parallelen sehnenartigen Abschnitten, deren Schnittkanten einen kleineren Abstand voneinander aufweisen als die Stirnseiten der Stege, wobei die den Stift beidseits überragenden längeren Teile der Scheibe eine keil- oder wendelförmige Verwindung besitzen. Diese keil- oder wendelförmige Verwindung führt dazu, daß die den Stift überragenden längeren Teile beim Drehen des Stifts zunächst die Stege berührungslos oder nahezu berührungslos und sodann an diesen mit zunehmender Drehung spannend angreifen, so daß eine gute und sichere Anklemmung des Beschlagteils an dem Strangprofil gewährleistet ist.

Der Stift ist mit einem dreieckigen Fortsatz versehen, der einen komplementären Durchbruch der Scheibe durchsetzt und mit einem Nietkopf versehen ist. Auf diese Weise ist eine undrehbare Verbindung der Scheibe mit dem Stift gewährleistet.

Der Stift kann mit einem Kopf versehen sein, der einen Schlitz oder einen Kreuzschlitz zum Angriff eines Schraubenziehers aufweist.

Zweckmäßigerweise ist der Kopf in einer Vertiefung angeordnet und weist einen radialen Fortsatz auf, der zwischen Anschläge bildenden Wandteilen der Vertiefung verdrehbar ist, die einen Drehwinkel der Stifts von etwa 90° begrenzen. Auf diese Weise kann die Anklemmung des Beschlagteils an dem Strangprofil durch eine Drehung des Stifts um etwa 90° bewirkt werden, ohne daß eine Fehlmontage durch Überdrehung zu befürchten ist.

Die Grundplatte des Beschlagteils kann mit rechtwinkelig auf dieser stehenden Wandteilen versehen sein, an denen zwei Lenker eines Doppellenkerscharniers gelagert sind. Auf diese Weise ist das Beschlagteil in Form eines Scharniertopfs eines Doppellenkerscharniers ausgebildet.

Die erfindungsgemäße Vorrichtung eignet sich zur Befestigung beliebiger Teile an einem Strangprofil.

Nach einer bevorzugten Ausführungsform ist vorgesehen, daß das Halteteil oder die Grundplatte einen Handgriff trägt. Dieser Handgriff kann beispielsweise zur Betätigung einer Tür oder Klappe eines Möbels dienen.

Zweckmäßigerweise besteht der Handgriff aus einem im wesentlichen U-förmigen Bügel, dessen Schenkel mit dem Halteteil oder der Grundplatte verbunden sind. Die Schenkel können angrenzend an das Halteteil oder die Grundplatte U-förmig aus ihrer gemeinsamen Ebene heraus gekrümmt sein und mit ihren Krümmungen einen Steg des Strangprofils umfassen. Auf diese Weise wird eine festere Verbindung des Handgriffs mit dem Halteteil oder der Grundplatte geschaffen.

Die erfindungsgemäße Vorrichtung eignet sich auch zur Verbindung von Strangprofilabschnitten miteinander. Nach einer weiteren bevorzugten Ausführungsform ist vorgesehen, daß die Klemmeinrichtung nur aus dem Halteteil besteht, daß das Halteteil die Ebene der stumpfwinkelig aufeinanderstoßenden Stirnseiten zu verbindender Strangprofile durchsetzt und daß die beidseits der Ebene liegenden Teile des Halteteils in den angrenzenden C-förmigen Profilteilen durch jeweils mindestens einen ein Klemmelement tragenden Stift verspannbar sind. Die durch die erfindungsgemäße Vorrichtung miteinander zu verbindenden Strangprofilabschnitte weisen vorzugsweise identische Profile auf. Die Profilabschnitte können in gestreckter Form oder aber auch in einer winkelig zueinander stehenden Form miteinander verbunden werden. Entsprechend kann das Halteteil aus einem langgestreckten Profilabschnitt oder aber auch aus einem winkeligen, vorzugsweise rechtwinkeligen Profilstück bestehen, dessen Schenkel identische Querschnitte aufweisen. Sollen Strangprofilabschnitte rechtwinkelig miteinander verbunden werden, werden diese auf Gehrung geschnitten.

In weiterer Ausgestaltung der Erfindung ist vorgesehen, daß die miteinander zu verbindenden Profilabschnitte mit Hohlkammern versehen sind, die parallel zu den Stegen verlaufen und in die zur Aussteifung der Verbindung die Ebene durchsetzende Profilstücke einsetzbar sind. Die der Aussteifung dienenden Profilstücke können aus Flachstahl bestehen, die mit Sicken versehen sind. Zur Verbindung rechtwinkelig aufeinander stoßender Strangprofilabschnitten sind die Profilstücke rechtwinkelig abgewinkelt, wobei die Schenkel der Winkelstücke beidseits der Biegestelle mit Sicken versehen sind.

Ausführungsbeispiele der Erfindung werden nachstehend anhand der Zeichnung näher erläutert. In dieser zeigt
- Fig. 1: eine Seitenansicht eines Doppellenkerscharniers, dessen Scharniertopf an den C-förmigen Teil eines Strangprofils angeklemmt ist,
- Fig. 2: eine perspektivische Ansicht des Strangprofils,
- Fig. 3: einen Schnitt durch den Flansch eines Scharniertopfs im Bereich eines der Befestigung dienenden Stifts,
- Fig. 4: eine Unteransicht des Scharniertopfs nach Fig. 3,
- Fig. 5: eine Vorderansicht des Scharniertopfs,
- Fig. 6: eine Draufsicht auf den Scharniertopf,
- Fig. 7: eine Draufsicht auf die der Verspannung dienende Scheibe,
- Fig. 8: eine Seitenansicht des die Scheibe tragenden Stifts im unvernieteten Zustand,
- Fig. 9: eine Unteransicht des Stifts nach Fig. 8,
- Fig. 10: einen Schnitt durch ein Strangprofil, an das ein Handgriff angeklemmt ist,
- Fig. 11: eine Seitenansicht des Handgriffs nach Fig. 10,
- Fig. 12: eine Draufsicht auf den Handgriff in Richtung des Pfeils A in Fig. 11,
- Fig. 13: eine Draufsicht auf zwei rechtwinkelig miteinander verbundene Strangprofilstücke,
- Fig. 14: einen Schnitt durch die Verbindung nach Fig. 13 und
- Fig. 15: einen Schnitt nur durch das der Verbindung dienende Winkelprofil längs der Linie XIV-XIV in Fig. 13.

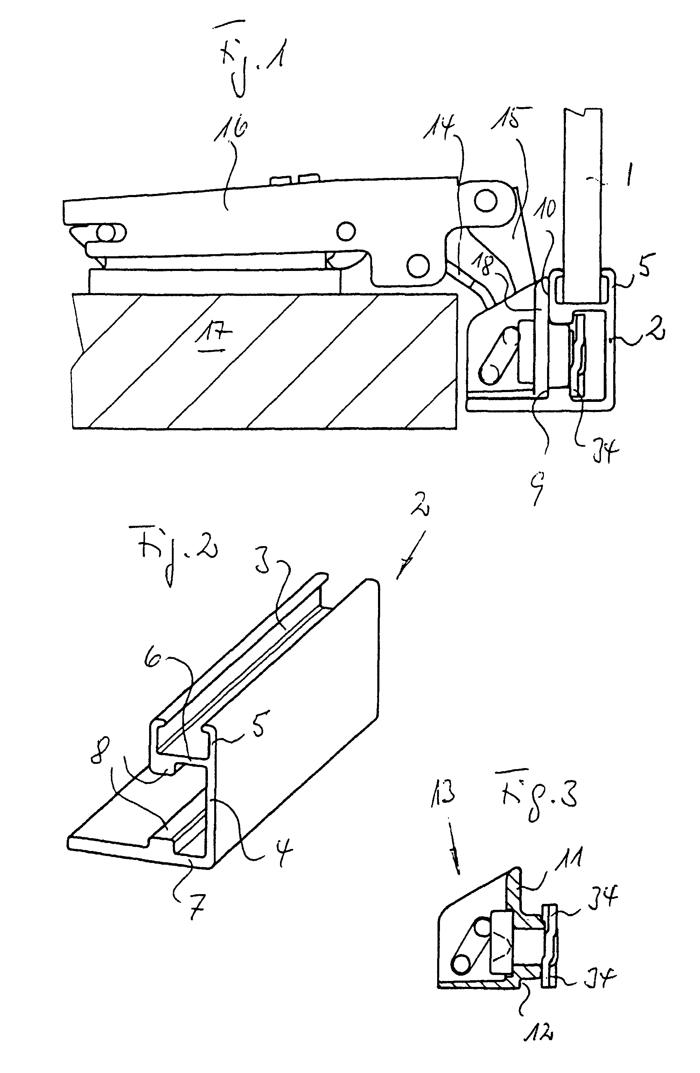

Aus Fig. 1 ist eine Seitenwand 1 beispielsweise des Korpusteils eines Schranks ersichtlich, mit dessen Rand ein Strangprofil 2 verbunden ist. Das Strangprofil 2 beispielsweise aus Aluminium weist einen U-förmigen Profilteil 3 auf, dessen Schenkel an ihren Enden mit nach innen gerichteten Abwinkelungen versehen sind. Dieser U-förmige Profilteil faßt den Rand der Wand 1 des Korpusteils in üblicher Weise ein. Angrenzend an das U-förmige Profilteil 3 ist das Strangprofil 2 mit einem weiteren U-förmigen Profilteil versehen, dessen Stegteil 4 durch eine Verlängerung des äußeren Schenkels 5 des ersten U-förmigen Profilteils 3 gebildet ist. Der obere Schenkel des zweiten Profilteils ist durch das Stegteil 6 des ersten Profilteils und der untere Schenkel 7 durch eine Abwinkelung von dem Stegteil 4 gebildet. Die Schenkel 6, 7 sind mit zueinander parallelen verlaufenden Stegen 8 versehen, deren Stirnseiten einander zugewandt sind. Die äußeren Ränder 9, 10 der Stege 8 bilden Auflagen für die Stützflansche 11, 12 eines Scharniertopfs 13, der an das Strangprofil 2 angeklemmt ist. An dem Scharniertopf 13 sind die Lenker 14, 15 angelenkt, die den Scharnierarm 16 mit dem Scharniertopf 13 verbinden. Der Scharnierarm 16 ist in üblicher Weise mit einer Tür oder Klappe 17 verbunden. Selbstverständlich kann das Teil 17 auch die Seitenwand eines Korpusteils sein, an der durch das Scharnier 13- 16 die von dem Strangprofil 2 eingefaßte Tür, z. B. eine Glastür 1, angelenkt ist.

Der untere Schenkel 7 des Strangprofils 2 ist in der dargestellten Weise über den Steg 8 hinaus verlängert.

Der Scharniertopf 13 besteht aus einer Grundplatte 18, die auf ihrer Unterseite mit einem im wesentlichen rechteckigen Block 19 verbunden ist. Der Block 19 weist zueinander parallele schmale lange Seiten 20, 21 auf, derem Abstand dem Abstand der zueinander zugewandten Stirnseiten der Stege 8 entspricht. Auf seiner Oberseite ist die Grundplatte 18 mit zwei zueinander parallelen Wänden 22 versehen, die zusammen mit einer hochgezogenen Rückwand 23 einen im Querschnitt etwa rechteckigen topfförmigen Raum mit offener Vorderwand begrenzen, wobei an den Seitenwänden 22 in üblicher Weise die Lagerbolzen für die Lenker 14, 15 gehaltert sind:

Beidseits der Wandungen 22 ist die Grundplatte 8 im Bereich des rechteckigen Blocks 19 mit Bohrungen versehen, in denen der glatte Schaft 24 eines Stifts 25 drehbar gehaltert ist. Der Stift 25 ist mit einem Kopf 26 versehen, der einen Kreuzschlitz 27 zum Angriff für einen Schraubenzieher aufweist. Der Kopf 26 ist jeweils in einer Vertiefung der Oberseite der Befestigungsplatte 18 eingelassen. Weiterhin ist der Kopf 26 mit einem radialen Fortsatz 28 versehen, für den seitliche Wandungsteile der Vertiefung 29 in der Weise Anschläge bilden, daß sich der Kopf 26 in der Vertiefung um etwa 90° drehen läßt.

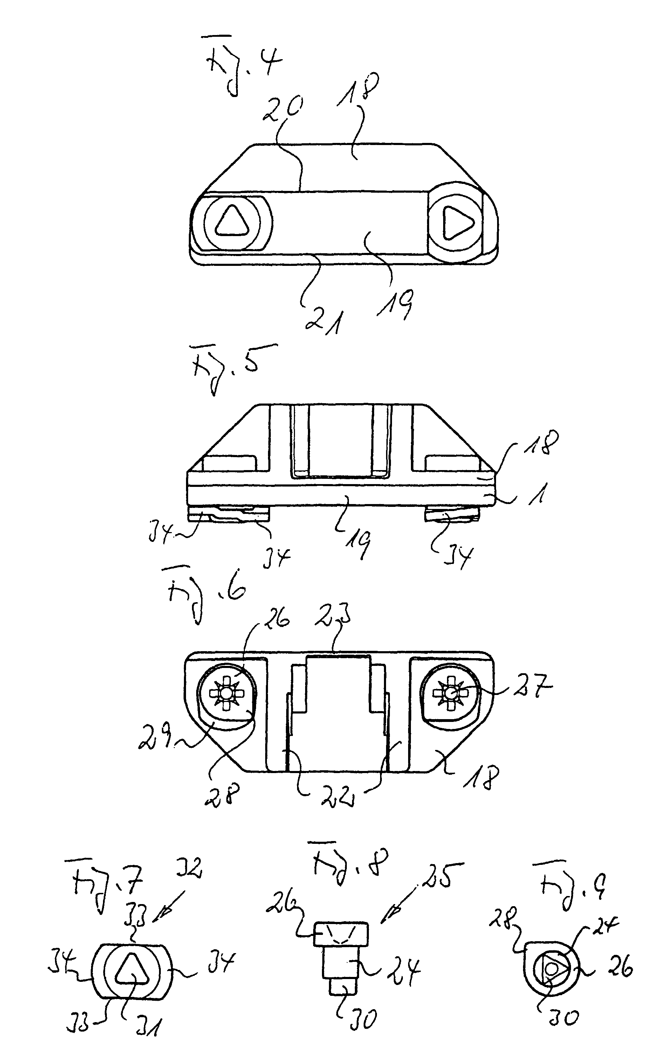

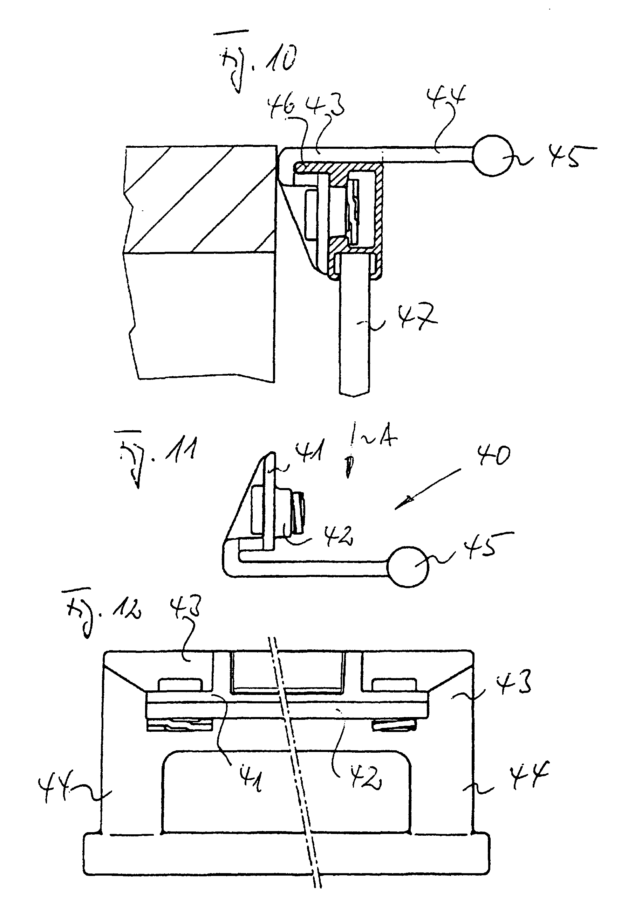

Der Stift 25 ist am äußeren Ende seines Schaftteils 24 mit einem im Querschnitt dreieckigen Fortsatz 30 versehen, der ein komplementäres dreieckiges Loch 31 einer Scheibe 32 durchsetzt. Zur undrehbaren Befestigung der Scheibe 32 an dem Stift 25 ist der Fortsatz 30 mit der Scheibe 32 vernietet. Die Scheibe 32 ist mit seitlichen sehnenartigen und parallel zueinander verlaufenden Freischnitten 33 versehen. Zwischen diesen Freischnitten 33 befinden sich kreisbogenförmig gekrümmte Ränder 34 der Scheibe 32, die in der aus den Fig. 1, 3 und 5 ersichtlichen Weise keil- oder wendelförmig verwunden sind.

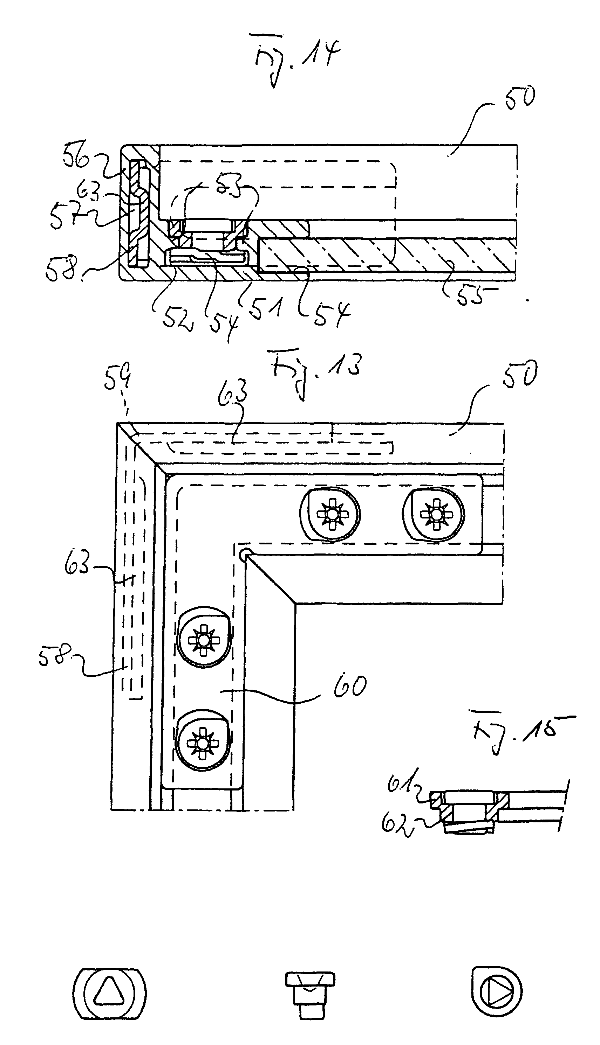

Zum Zwecke der Montage werden die Stifte 25 in der aus den linken Seiten der Fig. 5 und 6 ersichtlichen Weise derart gedreht, daß die überstehenden flügelartigen Ränder 34 der Scheibe 32 in Längsrichtung des rechteckigen Blocks 19 zeigen. In dieser Stellung liegen die radialen Vorsprünge 28 an einer einen Anschlag bildenden Seite der Ausnehmung 29 an. In dieser Form werden die Scharniertöpfe zwischen die Stege 8 in der Weise eingesetzt, daß sich die flanschförmigen Ränder 11, 12 der Grundplatte 18 auf den äußeren Seiten der Stege 8 bzw. deren Verlängerungen abstützen. In dieser Montagestellung erfolgt die Verriegelung der Scharniertöpfe mit dem Strangprofil 2 in der Weise, daß die Stifte 25 durch einen Schraubenzieher um etwa 90° in der Weise gedreht werden, daß sich die Vorsprünge 28 an die gegenüberliegenden Anschläge der Ausnehmungen 29 anlegen, wie dies aus den rechten Seiten der Fig. 5 und 6 ersichtlich ist.

Der Scharniertopf 13 besteht zweckmäßigerweise in üblicher Weise aus einem Spritzgußteil aus Metall.

Aus den Fig. 10 bis 12 ist das Anklemmen eines Handgriffs an ein Strangprofil mit der erfindungsgemäßen Befestigungsvorrichtung ersichtlich. Der Handgriff 40 ist mit einer Grundplatte 41 verbunden, die zusammen mit der blockartigen Leiste 42 das Halteteil bildet, das grundsätzlich in der gleichen Weise ausgestaltet ist, wie das Halteteil 18, 19 nach den Fig. 1 bis 6. Mit der Grundplatte 41 ist ein U-förmig gekrümmtes plattenförmiges Teil 43 verbunden, das in seitliche Schenkel 44 ausläuft, die den eigentlichen aus einer Stange 45 bestehenden Handgriff tragen. Das U-förmig gekrümmte Teil der Platte 43 faßt in der aus Fig. 10 ersichtlichen Weise einen aufragenden Steg 46 des Strangprofils 2 ein, so daß sich der Handgriff zusätzlich auch über die U-förmige Krümmung und den Profilsteg 46 an dem Strangprofil 2 abstützt. Die Anklemmung des Halteteils 41, 42 erfolgt in der anhand der Fig. 1 bis 9 beschriebenen Weise durch den das Klemmelement tragenden Stift.

In dem Ausführungsbeispiel nach den Fig. 10 bis 12 ist aus den Strangprofilstücken ein Rahmen gebildet, der die Platte 47 einer Tür oder Klappe einfaßt.

Aus den Fig. 13 bis 15 ist die Verbindung von rechtwinkelig auf Gehrung geschnittener Strangprofilstücke 50 durch die erfindungsgemäße Befestigungsvorrichtung ersichtlich. Die miteinander verbundenen Strangprofilstücke weisen grundsätzlich eine rechtwinkelige Form auf, wobei in den Schenkel 51 auf der Innenseite eine Nut 52 vorgesehen ist, deren Flanken auf ihren Innenseiten mit parallel zueinander verlaufenden Stegen 53 versehen sind, die Klemmstege für Klemmelemente 54 bilden. An der Stirnseite des Schenkels 51 ist eine Nut 54 vorgesehen, in die beispielsweise eine Türplatte 55 aus Holz oder Glas eingesetzt ist. Der andere Schenkel 56 ist mit einer Hohlkammer 57 versehen, in die zur Aussteifung der Verbindung ein Winkelprofil 58 aus Stahl eingesetzt ist, das beidseits seiner bogenförmigen Krümmung 59 mit Sicken 63 versehen ist.

Zur Verbindung der beiden auf Gehrung geschnittenen Strangprofilstücke 50 ist in die Nut 52 ein rechtwinkeliges Halteteil 60 eingesetzt, das in der aus den Fig. 14 und 15 ersichtlichen Weise ein abgestuftes Profil aufweist, wobei die zwischen dem oberen Profilteil 61 und dem unteren Profilteil 62 gebildeten Stufen die Auflagen auf den Stegen 53 bilden. Die Anklemmung an den Stegen 53 erfolgt in der anhand der Fig. 1 bis 9 beschriebenen Weise durch die Klemmelemente tragenden Stifte, wobei in dem dargestellten Ausführungsbeispiel jeder Schenkel mit zwei Klemmelementen versehen ist, obwohl auch ein einziges ausreichen würde.

## Patentansprüche

1. Vorrichtung mit Halteteil (18,19,60) zur Befestigung eines Teils vorzugsweise eines Scharnierteils (13) an einem Strangprofil (2) durch eine Klemmeinrichtung,
bei der das Strangprofil (2) im Abstand voneinander zwei zueinander parallele Stege (8) aufweist, zwischen die das Halteteil (18, 19, 60) des zu befestigenden Teils (13, 50), das sich auf den zueinander zugewandten Stirnseiten der Stege (8) abstützt einsetzbar ist, und
bei der das Halteteil (18, 19, 60) Stützflansche (11, 12) besitzt, die gegen die Außenseiten der Stege (8) anlegbar sind, wobei das Halteteil (18, 19, 60) mit mindestens einer Bohrung versehen ist, in der ein Stift (25) drehbar, aber axial unverschieblich gehalten ist, der an seinem die Bohrung durchsetzenden Ende als Klemmelement einen flügelförmigen Riegel (32) trägt, dessen Arme (34) durch Drehung des Stifts (25) aus ihrer zu den Stegen (8) parallelen Stellung in ihre die Stege (8) untergreifende Stellung gelangen,
**dadurch gekennzeichnet,**
**dass** das Halteteil aus einem etwa rechteckigen Block (19) besteht, dessen zueinander parallelen Seiten (20, 21) an den einander zugewandten Stirnseiten der Stege (8) anliegen, und dass an die zueinander parallelen Seiten (20, 21) des Blocks (19) beidseits die Stützflansche (11, 12) anschließen und dass der Stift (25) einen Kopf (26), einen im Block (19) drehbar gehaltenen Schaft (24) und an dessen äußerem Ende einen dreieckigen Fortsatz (30) aufweist, der ein komplementäres dreieckiges Loch (31) in dem Riegel (32) durchsetzt.

2. Vorrichtung nach Anspruch 1, **dadurch gekennzeichnet, dass** die Stege (8) die Ränder eines C-förmigen Profilteils des Strangprofils bilden oder sich an den Enden der Schenkel eines U-förmigen Profilteils (4, 6, 7) befinden.

3. Vorrichtung nach einem der Ansprüche 1 oder 2, **dadurch gekennzeichnet, dass** die Stützflansche (11, 12) durch die Seitenteile einer den Block (19) tragenden Grundplatte (18) gebildet sind.

4. Vorrichtung nach einem der Ansprüche 1 bis 3, **dadurch gekennzeichnet, dass** der Riegel aus einer Scheibe (32) mit zueinander parallelen sehnenartigen Freischnitten (33) besteht, deren Schnittkanten einen kleineren Abstand voneinander aufweisen als die zueinander zugewandten Stirnseiten der Stege (8) und dass die den Stift beidseits überragenden längeren Teile (34) der Scheibe (32) eine keil- oder wendelförmige Verwindung besitzen.

5. Vorrichtung nach einem der Ansprüche 1 bis 4, **dadurch gekennzeichnet, dass** der Stift (25) mit einem Kopf (26) versehen ist, der einen Schlitz oder Kreuzschlitz (27) aufweist.

6. Vorrichtung nach einem der Ansprüche 1 bis 5, **dadurch gekennzeichnet, dass** der Kopf (26) in einer Vertiefung (29) der Grundplatte (18) angeordnet ist und einen radialen Fortsatz (28) aufweist, der zwischen Anschläge bildenden Wandteilen der Vertiefung (29) verdrehbar ist, die einen Drehwinkel des Stifts (25) von etwa 90° zulassen.

7. Vorrichtung nach einem der Ansprüche 1 bis 6, **dadurch gekennzeichnet, dass** die Grundplatte (18) des Beschlagteils mit rechtwinkelig auf dieser stehenden Wandteilen (22) versehen ist, an denen zwei Lenker (14, 15) eines Doppellenkerscharniers gelagert sind.

8. Vorrichtung nach einem der Ansprüche 1 bis 7, **dadurch gekennzeichnet, dass** das Halteteil (41, 42) oder die Grundplatte (41) einen Handgriff (43, 44, 45) trägt.

9. Vorrichtung nach Anspruch 8, **dadurch gekennzeichnet, dass** der Handgriff (40) aus einem im wesentlichen U-förmigen Bügel besteht, dessen Schenkel (44) mit dem Halteteil oder der Grundplatte (41) verbunden sind.

10. Vorrichtung nach Anspruch 8 oder 9, **dadurch gekennzeichnet, dass** die Schenkel (44) oder eine die Schenkel tragende Platte (43) angrenzend an das Halteteil oder die Grundplatte (41) U-förmig aus ihrer gemeinsamen Ebene heraus gekrümmt sind und mit ihren gekrümmten Teil (43) einen Steg (46) des Strangprofils (2) umfassen.

11. Vorrichtung nach Anspruch 1, **dadurch gekennzeichnet, dass** das Halteteil (60) eine Verbindungseinrichtung zur Befestigung eines zweiten Strangprofils (50) an dem ersten Strangprofil ist, das die Ebene der stumpf aufeinander stoßenden Stirnseiten der zu verbindenden Strangprofile (40) durchsetzt, und dass die beidseits der Ebene liegenden Teile des Halteteils mit den angrenzenden C-förmigen Profilteilen (52) durch jeweils mindestens einen einen Riegel (32) tragenden Stift verspannbar sind.

12. Vorrichtung nach Anspruch 11, **dadurch gekennzeichnet, dass** das Halteteil aus einem langgestreckten Profilabschnitt besteht.

13. Vorrichtung nach Anspruch 12, **dadurch gekennzeichnet, dass** das Halteteil aus einem winkeligen, beispielsweise rechtwinkeligen Profilstück (60) besteht, dessen Schenkel identische Querschnitte aufweisen.

14. Vorrichtung nach Anspruch 12 oder 13, **dadurch gekennzeichnet, dass** die miteinander zu verbindenden Profilabschnitte 50 mit Hohlkammern (57) versehen sind, die parallel zu den Stegen (53) verlaufen und in die zur Aussteifung der Verbindung die Ebene durchsetzende Profilstücke (58) einsetzbar sind.

15. Vorrichtung nach Anspruch 14, **dadurch gekennzeichnet, dass** die Profilstücke (58) aus Flachstahl bestehen und mit Sicken (63) versehen sind.

## Claims

1. An apparatus having a holding part (18, 19, 60) for the securing of a part, preferably a hinge part (13), to an extruded section (2) by a clamping apparatus,
wherein the extruded section (2) has two webs (8) which are spaced apart from one another and are parallel to one another and between which the holding part (18, 19, 60) of the part (13, 50) to be secured, which is supported on the mutually facing end faces of the webs (18), can be inserted; and
wherein the holding part (18, 19, 60) has support flanges (11, 12) which can be placed against the outer sides of the webs (8), with the holding part (18, 19, 60) being provided with at least one bore hole in which a pin (25) can be screwed, but which is held axially undisplaceably, which carries a wing-shaped bolt (32) as a clamping element at its end passing through the bore, the arms (34) of said wing-shaped bolt (32) moving out of their position parallel to the webs (8) into their position engaging under the webs (8) by rotation of the pin (25),
**characterised in that**
the holding part consists of an approximately rectangular block (19) whose sides (20, 21) parallel to one another contact the mutually facing end faces of the webs (8); and **in that** the sides (20, 21) of the block (19) parallel to one another adjoin both sides of the support flanges (11, 12); and **in that** the pin (25) has a head (26), a shaft (24) held rotatably in the block (19) and, at its outer end, a triangular prolongation (30) which passes through a complementary triangular hole (31) in the bolt (32).

2. An apparatus in accordance with claim 1, wherein the webs (8) form the rims of a C-shaped sectional part of the extruded section or are located at the ends of the limbs of a U-shaped sectional part (4 6, 7).

3. An apparatus in accordance with either of claims 1 or 2, wherein the support flanges (11, 12) are formed by the side parts of a base plate (18) carrying the block (19).

4. An apparatus in accordance with any of claims 1 to 3, wherein the bolt consists of a disk (32) with mutually parallel chord-like cut-outs (33) whose cut edges have a smaller spacing from one another than the mutually facing end faces of the webs (8); and wherein the longer parts (34) of the disk (32) projecting over the pin at both sides have a wedge-shaped or spirally shaped twist.

5. An apparatus in accordance with any of claims 1 to 4, wherein the pin (25) is provided with a head (26) which has a slot or a crossed slot (27).

6. An apparatus in accordance with any of claims 1 to 5, wherein the head (26) is arranged in a recess (29) of the base plate (18) and has a radial prolongation (28) which can be turned between wall parts of the recess (29) forming abutments and permitting an angle of rotation of the pin (25) of approximately 90°.

7. An apparatus in accordance with any of claims 1 to 6, wherein the base plate (18) of the fitting part is provided with wall parts (22) which stand on it at right angles and on which two guides (14, 15) of a double-guide hinge are supported.

8. An apparatus in accordance with any of claims 1 to 7, wherein the holding part (41, 42) or the base plate (41) carries a handle (43, 44, 45).

9. An apparatus in accordance with claim 8, wherein the handle (40) consists of a substantially U-shaped bracket whose limbs (44) are connected to the holding part or to the base plate (41).

10. An apparatus in accordance with claim 8 or claim 9, wherein the limbs (44) or a plate (43) carrying the limbs are curved out of their common plane adjacent to the holding part or to the base plate (41) in a U shape and include a web (46) of the extruded section (2) with their curved part (43).

11. An apparatus in accordance with claim 1, wherein the holding part (60) is a connection device for the securing of a second extruded section (50) to the first extruded section which passes through the plane of the end faces of the extruded sections (40) to be connected to one another which abut one another bluntly; and wherein the parts of the holding part lying at both sides of the plane can be clamped with the adjoining C-shaped section parts (52) by at least one pin carrying a bolt (32) in each case.

12. An apparatus in accordance with claim 11, wherein the holding part consists of an elongate section portion.

13. An apparatus in accordance with claim 12, wherein the holding part consists of an angled, for example right angled, section piece (60) whose limbs have identical cross-sections.

14. An apparatus in accordance with either of claims 12 or 13, wherein the section portions (50) to be connected to one another are provided with hollow chambers (57) which extend parallel to the webs (53) and into which section pieces (58) passing through the plane can be inserted to stiffen the connection.

15. An apparatus in accordance with claim 14, wherein the section pieces (58) consist of flats and are provided with beads (63).

## Revendications

1. Dispositif avec une partie de retenue (18, 19, 60) pour fixer une partie, de préférence, une partie de charnière (13) à un profilé extrudé (2) au moyen d'un système de serrage,
dans lequel le profilé extrudé (2) comporte deux méplats (8) parallèles l'un par rapport à l'autre, à distance l'un de l'autre, entre lesquels peut être introduite la partie de retenue (18, 19, 60) de la partie à fixer (13, 50) en s'appuyant sur les faces frontales opposées l'une à l'autre des méplats (8), et
dans lequel la partie de retenue (18, 19, 60) présente des brides de support (11, 12), qui peuvent venir contre les faces extérieures des méplats(8), moyennant quoi la partie de retenue (18, 19, 60) est pourvue d'au moins une ouverture, dans laquelle une goupille (25) est retenue en pouvant tourner, mais sans déplacement axialement, laquelle porte, à son extrémité calant l'ouverture, en tant que dispositif de serrage un dispositif de verrouillage à oreilles (32), dont les bras (34) passent par rotation de la goupille (25) de leur position parallèle aux méplats (8) dans leur position de détalonnement des méplats (8),
**caractérisé en ce que**,
la partie de retenue est composée d'un bloc approximativement rectangulaire (19), dont les faces parallèles les unes aux autres (20, 21) sont adjacentes aux faces frontales opposées l'une à l'autre des méplats (8), et **en ce que**, de part et d'autre, les brides d'appui (11, 12) sont aboutées aux faces parallèles l'une par rapport à l'autre (20, 21) du bloc (19) et **en ce que** la goupille (25) comporte une tête (26), un tronc (24) retenu en rotation dans le bloc (19) ainsi que, à son extrémité extérieure, un prolongement (30) triangulaire, lequel cale un trou triangulaire complémentaire (31) dans le dispositif de verrouillage (32).

2. Dispositif selon la revendication 1, **caractérisé en ce que** les méplats (8) forment les bordures d'une partie profilée en forme de C du profilé extrudé ou se trouvent aux extrémités des branches d'une partie profilée en forme de U (4, 6, 7).

3. Dispositif selon l'une quelconque des revendications 1 ou 2, **caractérisé en ce que** les brides d'appui (11, 12) sont formées par les parties latérales d'une plaque de base (18) portant le bloc (19).

4. Dispositif selon l'une quelconque des revendications 1 à 3, **caractérisé en ce que** le dispositif de verrouillage est composé d'une rondelle (32) avec des découpes non guidées à la corde (33) parallèles les unes par rapport aux autres dont les arêtes de coupe sont séparées les unes des autres par une distance plus petite que les faces frontales opposées l'une à l'autre des méplats (8) et **en ce que** les parties (34), plus longues en saillie de part et d'autre de la goupille, de la rondelle (32) présentent une déformation hélicoïdale ou cunéiforme.

5. Dispositif selon l'une quelconque des revendication 1 à 4, **caractérisé en ce que** la goupille (25) est pourvue d'une tête (26), qui comporte une fente ou une fente cruciforme (27).

6. Dispositif selon l'une quelconque des revendications 1 à 5, **caractérisé en ce que** la tête (26) est agencée dans un enfoncement (29) de la plaque de base (18) et **en ce qu'**elle comporte un prolongement radial (28), qui peut être mis en rotation entre des parties de paroi, formant des butées, de l'enfoncement (29), lesquelles admettent un angle de rotation de la goupille (25) d'environ 90°.

7. Dispositif selon l'une quelconque des revendications 1 à 6, **caractérisé en ce que** la plaque de base (18) de la partie de garniture est pourvue de parties formant paroi (22) dressées sur celle-ci en formant un angle droit, sur celle-ci, sur lesquelles sont supportées deux branches articulées (14, 15) d'une charnière à deux branches articulées.

8. Dispositif selon l'une quelconque des revendications 1 à 7, **caractérisé en ce que** la partie de retenue (41, 42) ou la plaque de base (41) porte une manette (43, 44, 45).

9. Dispositif selon la revendication 8, **caractérisé en ce que** la manette (40) est composée d'un étrier essentiellement en forme de U, dont les branches (44) sont reliées à la partie de retenue ou à la plaque de base (41).

10. Dispositif selon la revendication 8 ou 9, **caractérisé en ce que** les branches (44) ou une plaque portant les branches (43) sont courbées en forme de U vers l'extérieur à partir de leur plan commun dans la zone contiguë à la partie de retenue ou à la plaque de base (41) et englobent dans leur partie courbée (43) un méplat (46) du profilé extrudé (2).

11. Dispositif selon la revendication 1, **caractérisé en ce que** la partie de retenue (60) est un système de liaison pour fixer un second profilé extrudé (50) au premier profilé extrudé, lequel cale le plan des faces frontales s'aboutant à plat l'une sur l'autre des profilés extrudés à relier (40), et **en ce que** les parties se trouvant de part et d'autre du plan de la partie de retenue sont serrables avec les parties profilées en forme de C (52) contiguës au moyen respectivement au moins d'une goupille portant un dispositif de verrouillage (32).

12. Dispositif selon la revendication 11, **caractérisé en ce que** la partie de retenue est composée d'un segment profilé allongé.

13. Dispositif selon la revendication 12, **caractérisé en ce que** la partie de retenue est composée d'une pièce profilée (60) en angle, par exemple en angle droit, dont les branches ont des sections identiques.

14. Dispositif selon la revendication 12 ou 13, **caractérisé en ce que** les segments profilés (50) à relier les uns avec les autres sont pourvus de cavités creuses (57), qui s'étendent parallèlement aux méplats (53) et sont insérables dans les pièces profilées (58) calant le plan pour étaiement de la liaison.

15. Dispositif selon la revendication 14, **caractérisé en ce que** les pièces profilées (58) sont réalisées à base d'un acier plat et sont pourvues de moulures (63).
